# EUROPÄISCHE PATENTSCHRIFT

(11) **EP 1 079 316 B1**
(45) Veröffentlichungstag und Bekanntmachung des Hinweises auf die Patenterteilung: **22.12.2004**
(21) Anmeldenummer: 99118115.7
(22) Anmeldetag: 10.09.1999
(51) Int. Cl.: G06F 17/30, G06F 19/00

(54) **Interaktives System mit Linksstruktur zur Schaffung eines multimedialen Pflegestandards**
Interactive system for providing a multimedia healthcare standard using link structures
Système interactif utilisant une structure de liens pour créer un standard de soins multimédia

(30) Priorität: 20.08.1999 EP 99116398
(43) Veröffentlichungstag der Anmeldung: 28.02.2001
(73) Patentinhaber: Tulafor Anstalt, 9490 Vaduz (LI)
(72) Erfinder: Piwonka, Peter, 4054 Basel (CH)
(74) Vertreter: Rupp, Christian, Dipl.Phys.

(56) Entgegenhaltungen:
- WO-A-98/49647
- WO-A-99/22330
- PAVLOPOULOS S ET AL: "DESIGN AND DEVELOPMENT OF A MULTIMEDIA DATABASE FOR EMERGENCY TELEMEDICINE" TECHNOLOGY AND HEALTH CARE, IOS PRESS, AMSTERDAM,, NL, Bd. 6, Nr. 2/3, September 1998 (1998-09), Seiten 101-110, XP000910997 ISSN: 0928-7329

## Beschreibung

Die vorliegende Erfindung bezieht sich auf ein interaktives System mit einer Benutzeroberfläche zur Verknüpfung verschiedener Datenobjekte, die Informationen enthalten, die für eine standardisierte Pflege von Personen relevant sind, auf ein Computersystem zur interaktiven Verknüpfung verschiedener, unabhängiger Datenobjekte sowie auf ein Computer-Software-Produkt zur Implementierung einer solchen Benutzeroberfläche.

Die vorliegende Erfindung bezieht sich somit auf die Koordinierung und Steuerung der Kommunikation zwischen einer Benutzeroberfläche und beispielsweise in Datenbanken abgelegten Datenobjekten mittels einer entsprechend editierbaren Linkverwaltung. In Text- und/oder Graphikbestandteile der Benutzeroberfläche eingebettete Links stellen die Steuerzeichen für die zugeordneten Datenobjekte dar. Die Benutzeroberfläche kann somit insbesondere durch die Linkstruktur voneinander unabhängige Datenobjekte wie beispielsweise Datenbank-Systeme verbinden.

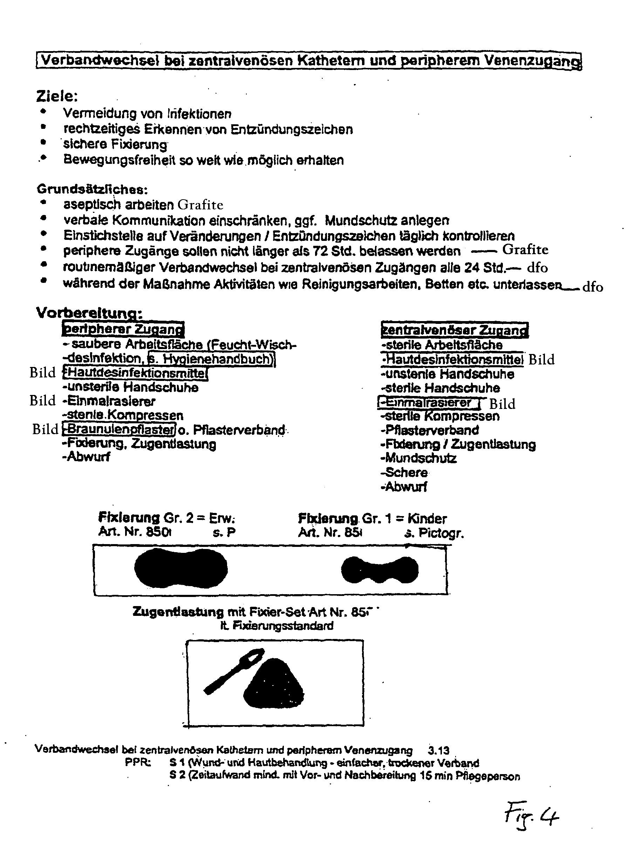

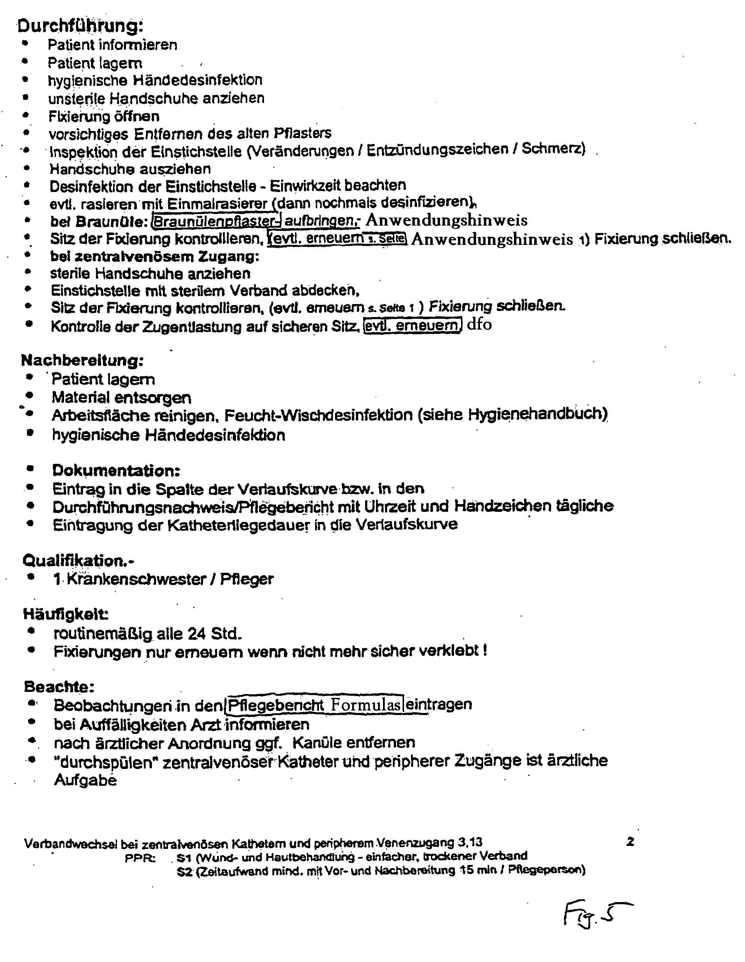

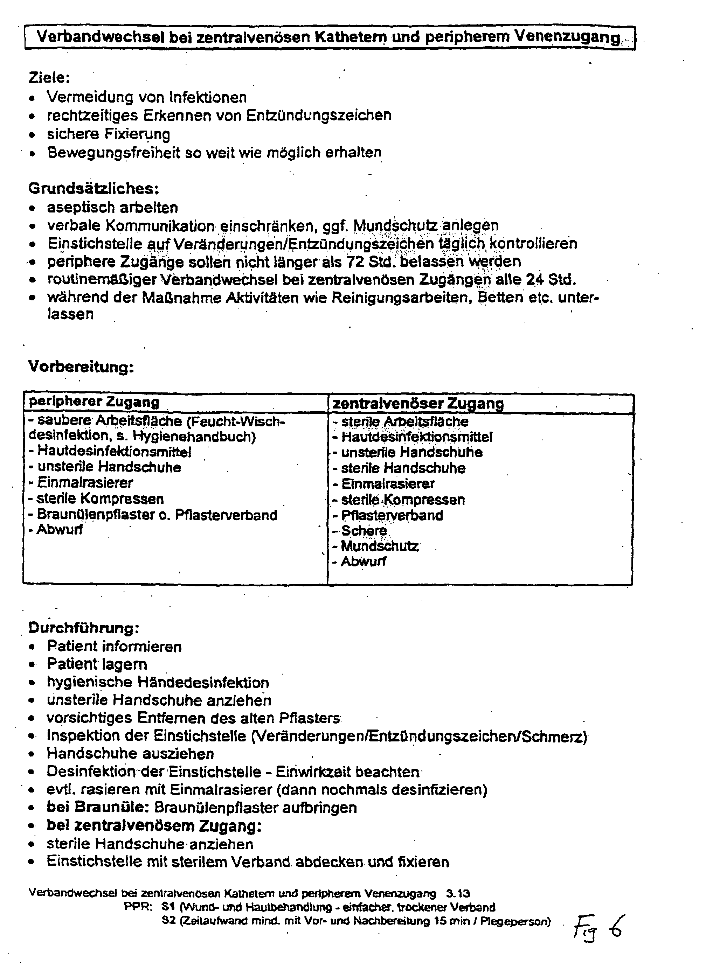

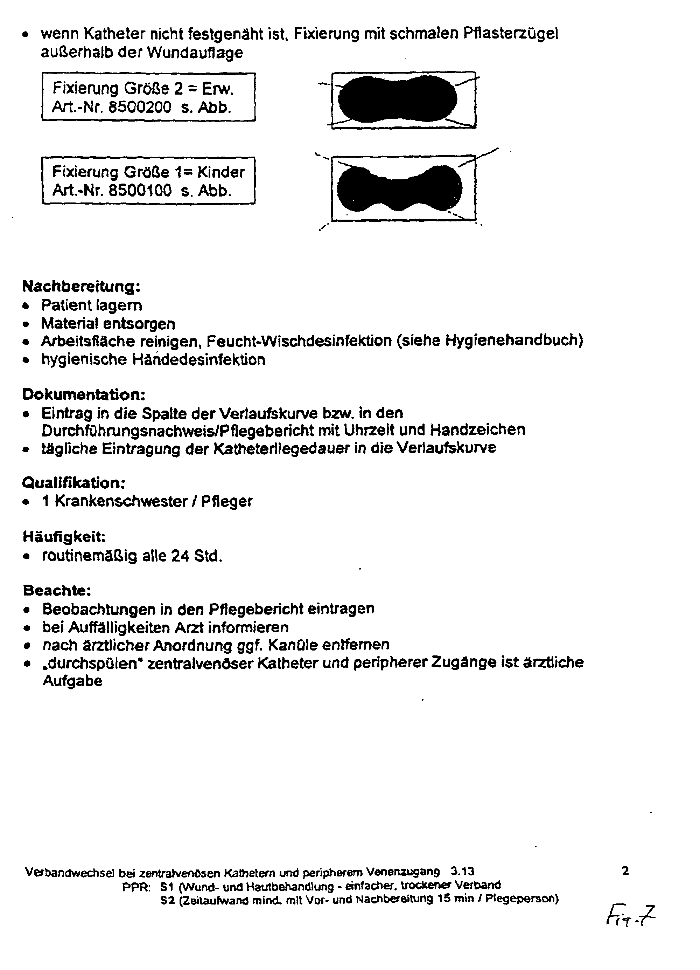

Im Hintergrund der vorliegenden Erfindung steht die standardisierte Pflege von pflegebedürftigen Personen beispielsweise in Krankenhäusern. Pflegestandards, das heißt Anleitungen bzw. Richtlinien zur Vorgehensweise bei bestimmten Pflegetätigkeiten, werden zur Zeit von den einzelnen Kliniken für die einzelnen Abteilungen erarbeitet und meist in Schriftform herausgegeben. Figuren 4 bis 7 zeigen Beispiele für solche bereits bestehenden Standards. Bei diesen bereits bestehenden Standards bestehen indessen zahlreiche Probleme. Ein solcher Pflegestandard weist regelmäßig die auszuführenden Schritte für die entsprechende Pflege sowie die zu verwendenden Materialien auf. Wenn der Benutzer eines solchen Pflegestandards weitere Informationen benötigt, muß er Handbücher oder Anweisungen der Hersteller zu Rate ziehen. Darüber hinaus gibt es keine Möglichkeit im Sinne einer Qualitätssicherung die ordnungsgemäße Erledigung der notwendigen Schritte zu protokollieren.

Ausgehend von diesem Stand der Technik ist es Aufgabe der vorliegenden Erfindung, eine Technik bereitzustellen, die die Implementierung eines multimedialen interaktiven Pflegestandards ermöglicht. Die technische Lösung, die diese Implementierung gestattet, ist in den Ansprüchen dargelegt.

Gemäß einem ersten Aspekt der Erfindung ist also ein interaktives System mit einer Benutzeroberfläche zur Verknüpfung verschiedener Datenobjekte vorgesehen, die Informationen enthalten, die für eine standardisierte Pflege von Personen relevant sind. Typischerweise sind diese Informationen die notwendigen Schritte für eine standardisierte Pflege sowie die zu verwendenden Materialien. Die Benutzeroberfläche weist Text- und Graphikbestandteile auf, die den standardisierten Ablauf der notwendigen Schritte der Pflege wiedergeben. In wenigstens einem Grafikbestandteil ist ein sogenanntes Link (elektronischer Verweis) zu einem der Datenobjekte eingebettet. Durch Aktivieren des Links kann ein zugeordneter Inhalt des Datenobjekts an der Benutzeroberfläche zur Anzeige gebracht werden, wobei der Inhalt Informationen zu dem zugeordneten Schritt des standardisierten Ablaufs wiedergibt. Dabei ist zur Sicherung des Pflegestandards ferner eine Kontrollfunktion vorgesehen, welche die Aktivierung von Links von folgenden Schritten solange sperrt, bis eine Bestätigungsinformation eingegangen ist, welche die Erledigung des vorhergehenden Schritts wiedergibt.

Wenigstens einem der Grafikbestandteile ist eine symbolische oder realistische Darstellung eines in dem entsprechenden Schritt zu verwendenden Gegenstands zugeordnet, wobei in die Darstellung des Gegenstands ein Link eingebettet ist, durch dessen Aktivieren ein zugeordneter Informationsinhalt eines Gegenstands-Inhaltsobjekts an der Benutzeroberfläche zur Anzeige gebracht wird.

Der zugeordnete Informationsinhalt kann eine symbolische oder realistische Darstellung der Verwendung des Gegenstands an dem Körper der Person wiedergeben.

In die Darstellung der Verwendung des Gegenstands kann wiederum ein Link eingebaut sein, durch dessen Aktivierung ein weiterer zugeordneter Informationsinhalt eines Gegenstands-Inhaltsobjekts an der Benutzeroberfläche zur Anzeige gebracht wird.

Der zugeordnete Informationsinhalt kann eine Information des Herstellers des Gegenstands zur Verwendung des Gegenstands sein.

Es können markierte Textbestandteile in der Benutzeroberfläche vorgesehen sein, in die Links eingebettet sind.

Durch Aktivieren eines der Links kann ein Online-Zugriff über ein Netzwerk auf ein Datenobjekt ausgelöst werden.

Das Netzwerk kann das Internet oder ein Intranet sein.

Mit Hilfe der Kontrollfunktion kann ferner eine Qualitäts-Sicherungsfunktion realisiert werden, welche nach ordnungsgemäßer Erledigung aller Schritte des Pflegestandards gemäß den eingegangen Bestätigungsinformationen ein Erledigungsprotokoll erstellt.

Es kann eine Editierfunktion vorgesehen sein, durch die die Struktur der Benutzeroberfläche durch Veränderung der Text- und/oder Grafikbestandteile sowie der eingebetteten Links verändert werden kann.

Durch die Editierfunktion kann auf eine Grafik-Datenbank zugegriffen werden, in der abstrakte und/oder realistische Darstellungen abgelegt sind, die in die zu editierende Benutzeroberfläche eingebaut werden können.

Gemäß einem weiteren Aspekt der Erfindung ist ein Computer-System zur interaktiven Verknüpfung verschiedener, unabhängiger Datenobjekte vorgesehen, wobei die Datenobjekte Informationen enthalten, die für eine standardisierte Pflege von Personen relevant sind. Das Computer-System weist dabei ein interaktives System wie oben ausgeführt auf.

Das Computer-System kann eine Schnittstelle zur Zusammenwirkung mit Krankenhaus-Verwaltungsprogrammen (kaufmännische Verwaltung, Materialverwaltung, Patientenverwaltung,Ärzteprogramme, Befunde, Röntgenbilder) aufweisen.

Das Computer-System kann netzwerkartig mit weiteren Systemen verknüpfbar sein, die sich an anderen Standorten, insbesondere anderen Krankenhäusern befinden.

Gemäß einem weiteren Aspekt der Erfindung ist ein computerlesbarer Aufzeichnungsträger vorgesehen, der einen Programmcode zur Implementierung eines interaktiven Systems auf einen Computersystem wie oben ausgeführt aufweist.

Gemäß einem weiteren Aspekt der vorliegenden Erfindung ist ein Computer-Software-Produkt vorgesehen, das in in einem Speicher eines Computers geladenen Zustand ein interaktives System wie oben ausgeführt implementiert.

Weitere Merkmale, Eigenschaften und Vorteile der vorliegenden Erfindung werden aus der vorliegenden Beschreibung von Ausführungsbeispielen und bezugnehmend auf die Figuren der begleitenden Zeichnungen näher ersichtlich.
Figur 1a zeigt eine schematische Ansicht eines Systems zur Implementierung eines multimedialen, interaktiven Pflegestandards,
Figur 1b zeigt, wie ein Computer-System mit einer Benutzeroberfläche gemäß der vorliegenden Erfindung mittels wenigstens einer Schnittstelle mit weiteren Programmen verknüpft werden kann, die oft in Krankenhäusern bereits installiert sind,
Figur 2 zeigt eine Benutzeroberfläche gemäß der vorliegenden Erfindung,
Figur 3 zeigt ein weiteres Beispiel für eine Benutzeroberfläche gemäß der vorliegenden Erfindung, und
Figuren 4 bis 7 zeigen Pflegestandards, wie sie aus dem Stand der Technik bekannt sind.

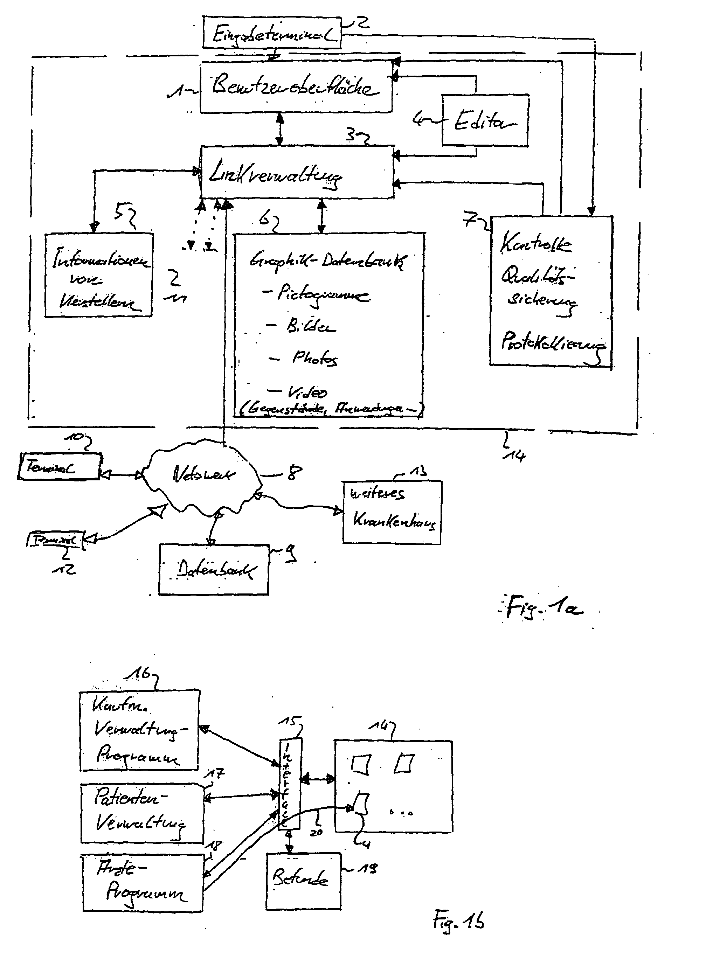

Bezugnehmend auf Figur 1a soll nunmehr zuerst schematisch das System zur Implementierung eines interaktiven multimedialen Pflegestandards für Kliniken erläutert werden. Die Implementierung des multimedialen Pflegestandards erfolgt dabei durch Koordinierung und Steuerung der Kommunikation zwischen einer Benutzeroberfläche 1 und Datenobjekten 5, 6 mittels einer entsprechend editierbaren Linkverwaltung 3. In die Text- und/oder Grafikbestandteile der Benutzeroberfläche 1 sind mittels der Linkverwaltung 3 Links (elektronische Verweise) eingebettet, die Steuerzeichen für die zugeordneten Datenobjekte 5, 6, 11 darstellen, durch die die entsprechenden Informationsinhalte der Datenobjekte aufgerufen und an der Benutzeroberfläche 1 zur Anzeige gebracht werden können. Mittels der Linkstruktur 3 und der Benutzeroberfläche 1 können also voneinander unabhängige Datenobjekte wie beispielsweise Datenbanken miteinander verbunden werden und zu dem interaktiven multimedialen Pflegestandard zusammengeführt werden.

Dem Benutzer wird dabei ein Eingabeterminal 2 bereitgestellt, mit dem er auf die Benutzeroberfläche 1 zugreifen kann.

Das in Figur 1a dargestellte System eignet sich insbesondere auch für eine Netzwerk-Implementierung, das heißt mittels eines Netzwerks 8 werden mehrere Terminals 2, 10, 12 miteinander verbunden, die somit auf zentrale Datenobjekte zugreifen können. Durch das Netzwerk 8, das beispielsweise das Internet oder ein Intranet sein kann, können insbesondere auch Online-Zugriffe auf Datenbanken 9 (beispielsweise Internet-Informationsinhalte von Herstellern von Pflegeartikeln) während der Benutzung des multimedialen, interaktiven Pflegestandards geschaffen werden.

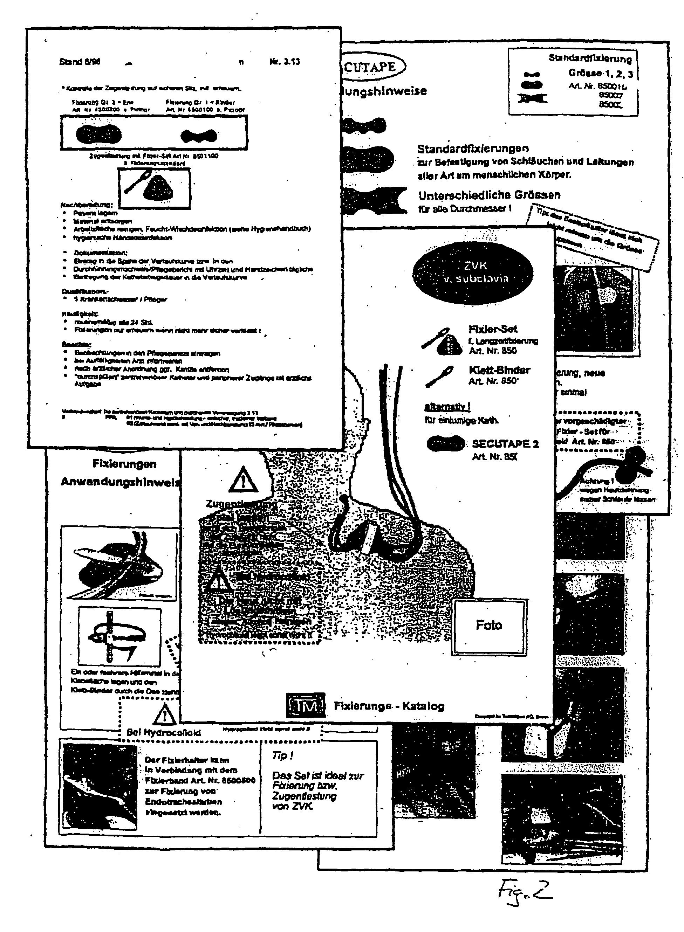

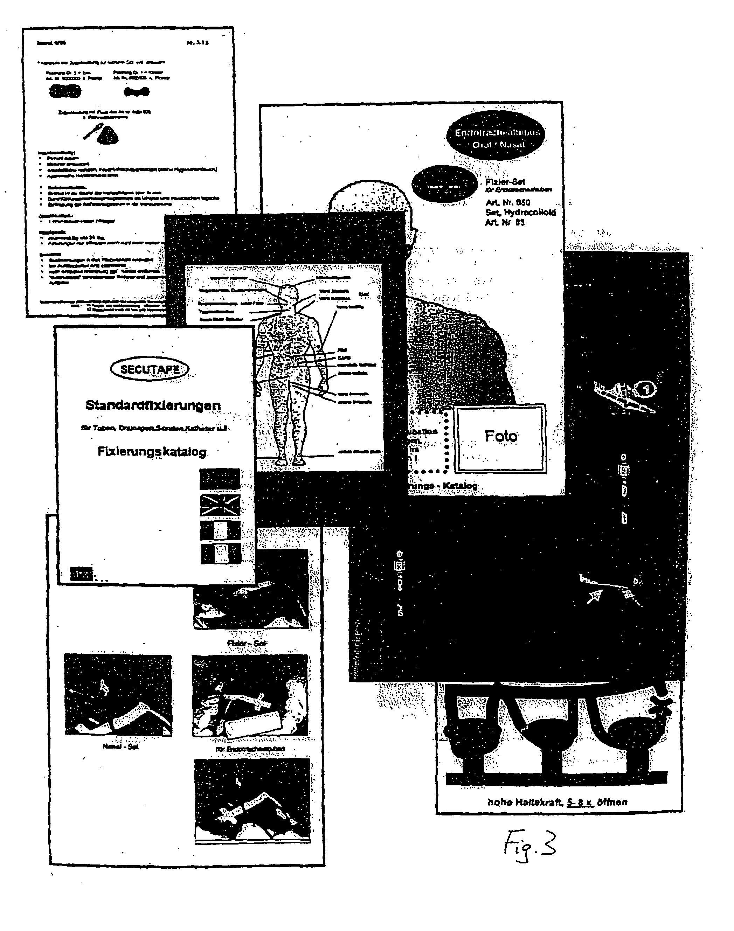

Im folgenden soll insbesondere bezugnehmend auf Figuren 2 und 3 der Ablauf gemäß der vorliegenden Erfindung erläutert werden.

Ausgangspunkt ist es, daß an der Benutzeroberfläche 1 ein Gesamtstandard angezeigt wird. Aus diesem Gesamtstandard kann dann ein vorbestimmter Pflegestandard ausgewählt werden. Ein Pflegestandard besteht dabei aus einer Abfolge von Schritten und zu verwendenden Gegenständen. Die zu verwendenden Gegenstände sind dabei graphisch, das heißt beispielsweise in Form von Piktogrammen oder Bildern dargestellt. In markierte Textbestandteile der Benutzeroberfläche 1 und/oder Graphikbestandteile sind mittels der Linkverwaltung 3 Links eingebettet. Durch Aktivieren des entsprechenden markierten Textbestandteils und/oder Graphikbestandteils, beispielsweise mittels Anklicken mit einer Maus durch den Benutzer, wird ein Zugriff auf einen zugeordneten Informationsinhalt eines der Datenobjekte 5, 6, 9, 11 geschaffen. Dieser zugeordnete Informationsinhalt der durch das entsprechende Steuerzeichen aufgegriffenen Datenbank wird dann an der Benutzeroberfläche 1 zur Anzeige gebracht.

Beispielsweise kann durch Anklicken eines entsprechenden Piktogramms/Bilds eine weitere Information über beispielsweise eine zu verwendende Fixierung (siehe Figur 3) erhalten werden.

Darüber hinaus kann eine graphische Darstellung der Anwendung/Plazierung des Gegenstands am Körper des Patienten erhalten werden. Diese Darstellung kann weiter Piktogramme/Bilder/Hinweise enthalten, in die Links eingebettet sind, durch die beispielsweise die genauen Anwendungshinweise des Herstellers auf der Benutzeroberfläche 1 zur Anzeige gebracht werden können. Mittels der Steuerzeichen der Linkverwaltung 3 kann somit ausgehend von einem Informationsinhalt der Graphik-Datenbank 6 (Piktogramm einer Fixierung) auf eine weitere Datenbank 5 zugriffen werden, in der die Informationen/Anwendungshinweise von Herstellern abgelegt sind. Der Benutzer merkt somit nicht, daß er in Wirklichkeit auf voneinander unabhängige Datenobjekte zugreift, die mittels der Benutzeroberfläche 1 und der Linkverwaltung 3 zu einem neuen Gesamtsystem verbunden sind.

Über eingebettete Links können insbesondere auch Bilder/Fotografien der realen Anwendung von bei der Pflege zu verwendenden Gegenständen am Patienten gezeigt werden.

Weitere wichtige Hinweise für den Benutzer können also über Links in jeglicher Form erhalten werden. Dabei kommen insbesondere auch Bilder, Graphiken, Video, Animationen usw. in Frage.

Die Benutzeroberfläche 1 kann mittels eines Editors 4 editiert werden. Mittels des Editors 4 können also die Text- und Graphikbestandteile der Benutzeroberfläche 1 geändert bzw. neu erstellt werden. Dazu können beispielsweise Graphikbestandteile der Graphik-Datenbank 6 mittels des Editors 4 in die Benutzeroberfläche 1 des entsprechenden Pflegestandards eingebaut werden. Der Editor 4 strukturiert dementsprechend die Linkverwaltung 3 neu. Die Graphik-Datenbank 6 kann insbesondere eine Sammlung der gebräuchlichsten Abbildungen bzw. Piktogramme enthalten, die somit einfach eingefügt werden können. Es können somit jederzeit Texte und Bilder/Graphiken ausgetauscht oder hinzugefügt werden.

Wie in Figur 1a schematisch gezeigt kann eine weitere Funktion zur Kontrolle/Qualitätssicherung/Protokollierung 7 vorgesehen sein. Dieser Kontrollfunktion 7 werden die Informationen vom Eingabeterminal 2 zugeführt und ausgehend von diesen Eingabe-/Bestätigungsinformationen steuert die Kontrollfunktion 7 die Linkverwaltung 3 und die Benutzeroberfläche 1 an. Beispielsweise kann erst dann ein weiterer Schritt des Pflegestandards an der Benutzeroberfläche 1 aktiviert werden, wenn der Kontrollfunktion 7 eine Bestätigungsfunktion 2 zugeführt wurde, die die Erledigung des entsprechenden vorhergehenden Schrittes des Pflegestandards anzeigt. Insbesondere kann auch die Aktivierung jeglicher weiterer Links gesperrt werden, bis der zur Zeit aktuelle Schritt als erledigt bestätigt wurde. Nach dem vollständigen Durchlauf der notwendigen Schritte für einen Pflegestandard kann die Kontrollfunktion 7 automatisch ein Protokoll zur Qualitätssicherung erstellen, das wiedergibt, daß alle Schritte ordnungsgemäß erledigt wurden.

Weiterhin kann der Gesamtstandard die notwendigen Formulare, Hinweise, Vorschriften, Anweisungen und Kontrollmeldungen für die Qualitätssicherung der Pflegetätigkeiten sowie die Kontrolle der Einhaltung des Standards mittels Pflegevisite usw. enthalten.

Der erfindungsgemäße interaktive multimediale Pflegestandard wird somit zum zentralen Management-Instrument für die Pflege in Kliniken.

Für die Kontrolltätigkeit der erforderlichen Dokumentierung der Abläufe und Vorgänge in Hinblick beispielsweise auf eine Zertifizierung im Rahmen des Qualitätsmanagements in Kliniken kann der multimediale, interaktive Pflegestandard weiterhin die notwendigen Anweisungen, Hinweise und Unterlagen enthalten, welche ebenfalls beispielsweise durch eingebettete Links animiert sind.

Der Standard kann auch sehr gut zur Unterrichtung und Weiterbildung von Pflegepersonal dienen.

Selbstverständlich kann das Computer-System 14 mit einer Benutzeroberfläche 1 wie oben ausgeführt netzwerkartig mit weiteren Computer-Systemen verknüpft werden, die sich an anderen Standorten, insbesondere in anderen Krankenhäusern 13 befinden. Somit können krankenhausübergreifende Pflegestandards realisiert werden.

Figur 1b zeigt, wie ein Computer-System 14 gemäß der vorliegenden Erfindung mittels wenigstens einer Schnittstelle 15 mit weiteren Programmen bzw. Datenbanken verknüpft werden kann, die sich üblicherweise bereits in Krankenhäusern installiert finden. Als Beispiele für solche üblicherweise bereits vorhandenen Programme bzw. Datenbanken sind in Figur 1b ein kaufmännisches Verwaltungsprogramm 16, eine Patientenverwaltung 17, ein Ärzteprogramm 18 sowie eine Befund-Datenbank 19 gezeigt. Das Ärzteprogramm 18 kann insbesondere mittels der Schnittstelle 15 derart mit dem Computer-System 14 zusammenwirken, daß Ärzte mittels des Ärzteprogramms 18 durch Zugriff auf den Editor 4 des Computer-Systems 14 mittels der Schnittstelle 15 Vorgaben, Modifikationen oder sonstige Abänderungen des standardisierten Pflegeablaufs vornehmen können. Dieser Zugriff der Ärzte auf den Pflegeablauf mittels des Editors 4 ist in Figur 1b schematisch mit 20 bezeichnet.

Mittels einer Schnittstelle gemäß Figur 1b kann das Computer-System 14 auch mit weiteren üblicherweise vorhandenen Programmen, wie beispielsweise Fakturierungsoder Materialverwaltungsprogrammen zusammenarbeiten. Somit werden synergetische Effekte möglich. Wenn zum Beispiel (beispielsweise durch den Kontrollmodus 7) das Computer-System 14 zur standardisierten Pflege erfaßt, daß ein zur Pflege benötigter Gegenstand einem Vorrat entnommen wurde, kann dies dem kaufmännischen Verwaltungsprogramm 16 zum entsprechenden Material-Management (gegebenenfalls Nachbestellung) übermittelt werden.

Durch diese Schnittstelle 15 wird es insbesondere auch möglich, sämtliche im vorliegenden oder auch in abgelegenen Krankenhäusern vorliegende Informationen bezüglich des zu pflegenden Patienten für die standardisierte multimediale und interaktive Pflege zu verwerten und entsprechende Datenbanken, die Informationen über den Patienten enthalten, gleichzeitig zu erneuern.

Zusammengefaßt wird der Pflegestandard multimedial und interaktiv gestaltet, indem zuerst Textbestandteile möglichst weitgehend durch Bilder und Piktogramme bzw. graphische Darstellungen ersetzt werden. Dies betrifft einerseits die zu verwendenden Materialien/Gegenstände und andererseits die Vorgehensweise/Schritte.

Querverweise auf Handbücher und Hygieneanweisungen können durch Einbettung von Links in markierte Textbestandteile eingebunden werden.

Bilder/Piktogramme und markierte Texthinweise enthalten eine eingebettete Link-Funktion, die es dem Benutzer ermöglicht, durch Anklicken beispielsweise Informationen über ein angegebenes Produkt und die beste Vorgehensweise zu erhalten. Ebenso verhält es sich mit Texthinweisen, das heißt durch Anklicken erscheint beispielsweise die in Frage kommende Seite/Kapitel eines Handbuchs oder der Hygieneanweisung.

## Patentansprüche

1. Interaktives System mit einer Benutzeroberfläche zur Verknüpfung verschiedener Datenobjekte, die Informationsinhalte enthalten, die für eine standardisierte Pflege von Personen relevant sind, wobei
- die Benutzeroberfläche (1) Text- und Graphikbestandteile aufweist, die den standardisierten Ablauf der notwendigen Schritte wiedergeben,
- in wenigstens einem Graphikbestandteil ein Link zu einem der Datenobjekte (5, 6, 7) eingebettet ist,
- durch Aktivieren des Links ein zugeordneter Informationsinhalt des Datenobjekts an der Benutzeroberfläche (1) zur Anzeige gebracht wird, der Informationen zu dem zugeordneten Schritt des standardisierten Ablaufs wiedergibt, und
- eine Kontrollfunktion (7) vorgesehen ist, welche die Aktivierung eines einem folgenden Schritt zugeordneten Links sperrt, bis eine Bestätigungsinformation eingegangen ist, welche die Erledigung des vorhergehenden Schritts wiedergibt.

2. Interaktives System mit einer Benutzeroberfläche nach Anspruch 1,
**dadurch gekennzeichnet,**
**daß** wenigstens einer der Graphikbestandteile eine symbolische oder realistische Darstellung eines in dem entsprechenden Schritt zu verwendenden Gegenstands ist, wobei in die Darstellung des Gegenstands ein Link eingebettet ist, durch dessen Aktivieren ein zugeordneter Informationsinhalt eines Gegenstands-Inhaltsobjekts an der Benutzeroberfläche (1) zur Anzeige gebracht wird.

3. Interaktives System mit einer Benutzeroberfläche nach Anspruch 2,
**dadurch gekennzeichnet,**
**daß** der zugeordnete Informationsinhalt eine symbolische oder realistische Darstellung der Verwendung des Gegenstands an dem Körper der Person wiedergibt.

4. Interaktives System mit einer Benutzeroberfläche nach Anspruch 3,
**dadurch gekennzeichnet,**
**daß** in die Darstellung der Verwendung des Gegenstands wiederum ein Link eingebaut ist, durch dessen Aktivierung ein weiterer zugeordneter Informationsinhalt eines Gegenstands-Inhaltsobjekts an der Benutzeroberfläche (1) zur Anzeige gebracht wird.

5. Interaktives System mit einer Benutzeroberfläche nach einem der Ansprüche 2 bis 4,
**dadurch gekennzeichnet,**
**daß** der zugeordnete Informationsinhalt eine Information des Herstellers des Gegenstands zur Verwendung des Gegenstands ist.

6. Interaktives System mit einer Benutzeroberfläche nach einem der vorhergehenden Ansprüche,
**dadurch gekennzeichnet,**
**daß** markierte Textbestandteile vorgesehen sind, in die Links eingebettet sind.

7. Interaktives System mit einer Benutzeroberfläche nach einem der vorhergehenden Ansprüche,
**dadurch gekennzeichnet,**
**daß** durch Aktivieren eines der Links ein Online-Zugriff über ein Netzwerk (8) auf ein Datenobjekt (9) ausgelöst wird.

8. Interaktives System mit einer Benutzeroberfläche nach Anspruch 7,
**dadurch gekennzeichnet,**
**daß** das Netzwerk das Internet (8) oder ein Intranet ist.

9. Interaktives System mit einer Benutzeroberfläche nach einem der vorhergehenden Ansprüche,
**dadurch gekennzeichnet,**
**daß** sie eine Qualitäts-Sicherungsfunktion aufweist, die nach ordnungsgemäßer Erledigung aller Schritte gemäß den eingegangenen Bestätigungsinformationen ein Erledigungsprotokoll erstellt.

10. Interaktives System mit einer Benutzeroberfläche nach einem der vorhergehenden Ansprüche
**dadurch gekennzeichnet,**
**daß** eine Editierfunktion (4) vorgesehen ist, durch die die Struktur der Benutzeroberfläche (1) durch Veränderung der Text- und/oder Graphikbestandteile sowie der eingebetteten Links verändert werden kann.

11. Interaktives System mit einer Benutzeroberfläche nach Anspruch 10,
**dadurch gekennzeichnet,**
**daß** durch die Editierfunktion (4) auf eine Graphik-Datenbank (6) zugegriffen werden kann, in der abstrakte und/oder realistische Darstellungen abgelegt sind, die in die zu editierende Benutzeroberfläche eingebaut werden können.

12. Computersystem zur interaktiven Verknüpfung verschiedener, unabhängiger Datenobjekte, die Informationen enthalten, zur Schaffung eines interaktiven Pflegestandards,
aufweisend ein interaktives System nach einem der vorhergehenden Ansprüche.

13. Computersystem nach Anspruch 12,
**dadurch gekennzeichnet,**
**daß** es ein Netwerk-System ist, das mehrere Benutzer-Terminals (2, 10) miteinander verbindet und durch Aktivieren eines Links ein Steuerzeichen für ein zentral vorgesehenes Datenobjekt ausgelöst wird.

14. Computersystem nach einem der Ansprüche 12 oder 13,
**dadurch gekennzeichnet,**
**daß** es wenigstens eine Schnittstelle (15) zur Zusammenwirkung mit Krankenhaus-Verwaltungsprogrammen aufweist.

15. Computersystem nach einem der Ansprüchen 12 bis 14,
**dadurch gekennzeichnet**,
es netzwerkartig mit weiteren Systemen verknüpfbar ist, die sich an anderen Standorten, insbesondere anderen Krankenhäusern befinden.

16. Computerlesbarer Aufzeichnungsträger,
aufweisend einen Programmcode zur Implementierung eines interaktives System nach einem der Ansprüche 1 bis 11 auf einem Computersystem nach einem der Ansprüche 12 bis 15.

17. Computer-Programmecode,
**dadurch gekennzeichnet,**
**daß** er im in einen Speicher eines Computers geladenen Zustand ein interaktives System nach einem der Ansprüche 1 bis 11 auf einem Computersystem nach einem der Ansprüche 12 bis 15 implementiert.

## Claims

1. Interactive system with a user interface for linking various data objects containing information content relevant to standardised care of persons, where
- the user interface (1) has text and graphic components which reflect the standardised procedure of the necessary steps,
- in at least one graphic object is embedded a link to one of the data objects (5, 6, 7),
- by activation of the link, the allocated information content of the data object is displayed on the user interface (1) giving information on the respective step of the standardised procedure, and
- a control function (7) is provided which blocks the activation of a link allocated to one of the following steps until confirmation information has been entered which confirms the performance of the previous step.

2. Interactive system with a user interface according to Claim 1, **characterised in that** at least one of the graphic components is a symbolic or realistic depiction of an object to be used in the corresponding step, where embedded in the depiction of the object is a link, by activation of which the allocated information content of an object content subject can be displayed on the user interface (1).

3. Interactive system with a user interface according to Claim 2, **characterised in that** the allocated information content reflects a symbolic or realistic depiction of the use of the object on the body of the person.

4. Interactive system with a user interface according to Claim 3, **characterised in that** embedded in the depiction of use of the object is a further link, by activation of which a further allocated information content of an object content subject can be displayed on the user interface (1).

5. Interactive system with a user interface according to any of Claims 2 to 4, **characterised in that** the allocated information content is information from the manufacturer of the object on use of the object.

6. Interactive system with a user interface according to any of the previous claims, **characterised in that** marked text elements are provided which are embedded in the links.

7. Interactive system with a user interface according to any of the previous claims, **characterised in that** by activation of one of the links on-line access is triggered via a network (8) to a data object (9).

8. Interactive system with a user interface according to Claim 7, **characterised in that** the network is the internet (8) or an intranet.

9. Interactive system with a user interface according to any of the previous claims, **characterised in that** it has a quality control function which after proper performance of all steps according to the confirmation information entered, produces a performance report.

10. Interactive system with a user interface according to any of the previous claims, **characterised in that** an editing function (4) is provided via which the structure of the user interface (1) can be modified by changing the text and/or graphic components and the embedded links.

11. Interactive system with a user interface according to Claim 10, **characterised in that** via the editing function (4) access can be obtained to a graphic database (6) in which are stored abstract and/or realistic depictions which can be integrated in the user interface to be edited.

12. Computer system for interactive linking of various independent data objects containing information to create an interactive care standard, having an interactive system according to any of the previous claims.

13. Computer system according to Claim 12, **characterised in that** it is a network system which connects several user terminals (2, 10) together and by activation of a link a control character is triggered for a centrally provided data object.

14. Computer system according to one of Claims 12 or 13, **characterised in that** it has at least one interface (15) for co-operation with hospital administration programs.

15. Computer system according to any of Claims 12 to 14, **characterised in that** it can be linked via a network with other systems situated at different locations, in particular at other hospitals.

16. Computer-legible data medium with a program code for implementation of an interactive system according to any of Claims 1 to 11 on a computer system according to any of Claims 12 to 15.

17. Computer program code **characterised in that** it is implemented in a state, loaded in a memory of a computer, of an interactive system according to any of Claims 1 to 11 on a computer system according to any of Claims 12 to 15.

## Revendications

1. Système interactif comportant une interface utilisateur destinée à combiner des objets de données qui présentent chacun un contenu informationnel qui est utile pour appliquer un modèle de soins à des personnes, dans lequel
- l'interface utilisateur (1) comporte des composants textuels et graphiques qui reproduisent le processus modélisé des étapes nécessaires,
- un lien avec l'un des objets de données (5, 6, 7) est inséré dans au moins un composant graphique,
- l'activation du lien permet de visualiser sur l'interface utilisateur (1) un contenu informationnel, associé à l'objet de données, qui reproduit des informations relatives à l'étape associée du processus modélisé, et
- il est prévu une fonction de contrôle (7) qui bloque l'activation d'un lien associé à une étape suivante jusqu'à l'entrée d'une information de confirmation qui reproduit l'exécution de l'étape précédente.

2. Système interactif comportant une interface utilisateur selon la revendication 1, **caractérisé en ce que** au moins l'un des composants graphiques est une représentation symbolique ou réaliste d'un élément à utiliser dans l'étape correspondante, un lien étant intégré dans la représentation de l'élément et l'activation du lien permettant de visualiser sur l'interface utilisateur (1) un contenu informationnel associé d'un objet de contenue d'élément.

3. Système interactif comportant une interface utilisateur selon la revendication 2, **caractérisé en ce que** le contenu informationnel associé reproduit une représentation symbolique ou réaliste de l'utilisation de l'élément au niveau du corps de la personne.

4. Système interactif comportant une interface utilisateur selon la revendication 3, **caractérisé en ce qu'**un lien est inséré dans la représentation de l'utilisation de l'élément, l'activation du lien permettant de visualiser sur l'interface utilisateur (1) un autre contenu informationnel associé d'un objet de contenue d'élément.

5. Système interactif comportant une interface utilisateur selon l'une des revendications 2 à 4, **caractérisé en ce que** le contenu informationnel associé est une information du fabricant de l'élément qui est destinée à l'utilisation de l'élément.

6. Système interactif comportant une interface utilisateur selon l'une des revendications précédentes, **caractérisé en ce qu'**il est prévu des composants textuels marqués dans lesquels sont insérés des liens.

7. Système interactif comportant une interface utilisateur selon l'une des revendications précédentes, **caractérisé en ce que** l'activation de l'un des liens permet de déclencher un accès en ligne, par l'intermédiaire d'un réseau (8), à un objet de données (9).

8. Système interactif comportant une interface utilisateur selon la revendication 7, **caractérisé en ce que** le réseau est l'Internet (8) ou un Intranet.

9. Système interactif comportant une interface utilisateur selon l'une des revendications précédentes, **caractérisé en ce que** l'interface utilisateur comporte une fonction de sécurité de qualité qui établit un protocole d'exécution après l'exécution ordonnée de toutes les étapes en fonction des informations de confirmation entrées.

10. Système interactif comportant une interface utilisateur selon l'une des revendications précédentes, **caractérisé en ce qu'**il est prévu une fonction d'édition (4) permettant de modifier la structure de l'interface utilisateur (1) en modifiant les composants textuels et/ou graphiques ainsi que les liens insérés.

11. Système interactif comportant une interface utilisateur selon la revendication 10, **caractérisé en ce que** la fonction d'édition (4) permet d'accéder à une banque de données graphiques (6) dans laquelle sont mémorisées des représentations abstraites et/ou réalistes qui peuvent être insérées dans l'interface utilisateur à éditer.

12. Système informatique comportant un système interactif selon l'une des revendications précédentes et destiné à combiner de façon interactive divers objets de données indépendants qui contiennent des informations afin de générer un modèle de soin interactif.

13. Système informatique selon la revendication 12, **caractérisé en ce que** c'est un système réseau qui relie plusieurs terminaux utilisateurs (2, 10) entre eux et **en ce que** l'activation d'un lien permet de déclencher un signal de commande d'un objet de données prévu au niveau central.

14. Système informatique selon l'une des revendications 12 ou 13, **caractérisé en ce qu'**il comporte au moins une interface (15) destinée à coopérer avec des programmes de gestion d'hôpitaux.

15. Système informatique selon l'une des revendications 12 à 14, **caractérisé en ce qu'**il peut être combiné en réseau à d'autres systèmes qui se trouvent dans d'autres sites, en particulier dans d'autres hôpitaux.

16. Support d'enregistrement lisible par ordinateur, comportant un code de programme destiné à la mise en oeuvre d'un système interactif selon l'une des revendications 1 à 11 sur un système informatique selon l'une des revendications 12 à 15.

17. Code de programme informatique, **caractérisé en ce qu'**il met en oeuvre, lorsqu'il est chargé dans une mémoire d'un ordinateur, un système interactif selon l'une des revendications 1 à 11 sur un système informatique selon l'une des revendications 12 à 15.
